# EUROPEAN PATENT SPECIFICATION

(11) **EP 0 475 423 B1**
(45) Date of publication and mention of the grant of the patent: **15.02.1995**
(21) Application number: 91115535.6
(22) Date of filing: 13.09.1991
(51) Int. Cl.: G03G 15/02

(54) **Image recording apparatus**
Bildaufnahmegerät
Appareil d'enregistrement d'images

(30) Priority: 14.09.1990 JP 242564/90; 14.09.1990 JP 242565/90
(43) Date of publication of application: 18.03.1992
(73) Proprietor: CANON KABUSHIKI KAISHA, Tokyo (JP)
(72) Inventor: Nakahara, Takashi, c/o CANON KABUSHIKI KAISHA, Tokyo (JP); Masuda, Shunichi, c/o CANON KABUSHIKI KAISHA, Tokyo (JP); Yoshimoto, Toshio, c/o CANON KABUSHIKI KAISHA, Tokyo (JP); Hori, Kenjiroh, c/o CANON KABUSHIKI KAISHA, Tokyo (JP); Akiyama, Satoshi, c/o CANON KABUSHIKI KAISHA, Tokyo (JP); Kuramochi, Yoshimi, c/o CANON KABUSHIKI KAISHA, Tokyo (JP); Nakata, Yasuhiro, c/o CANON KABUSHIKI KAISHA, Tokyo (JP)
(74) Representative: Pellmann, Hans-Bernd, Dipl.-Ing.

(56) References cited:
- EP-A- 0 280 542
- EP-A- 0 338 546

## Description

### BACKGROUND OF THE INVENTION

### Field of the Invention

The present invention relates to an image recording apparatus for forming an electrostatic image, especially relates to an image recording apparatus having a high voltage power source for a contact charger.

### Description of the Prior Art

Hitherto, an electrostatic image recording apparatus mainly employs a corona charge method so as to supply a charge to a photosensitive drum by means of the corona discharge method. Since a conventional electrostatic image recording apparatus utilizing the corona discharge method encounters problems of an excessively high corona discharge voltage level of 5 to 10 KV and generation of ozonic gas, there has recently been developed an image recording apparatus which employs a contact charge method in which the electrostatic process is performed by using the high voltage power source which uses a relatively low voltage level of 1 KV to 3 KV without ozonic gas, as described in document EP-A-0 338 546, for example.

An electrostatic image recording apparatus of the above-described type is arranged in such a manner that the charging, developing and transferring potentials are established with respect to the potential of the core of the photosensitive drum as the reference potential. Usually, the ground (hereinafter called "GND") level of the high potential power source circuit is made to be the same as the potential level of the core of the photosensitive drum and as well as the charging, developing and transferring potentials are generated in the high potential power source circuit while using the above-described GND level as the reference.

The output voltage (hereinafter called "charging output voltage") bias to be applied to the charger is arranged to be a superimposed bias obtained by superimposing an AC (Alternative Current) bias (hereinafter called "charging AC voltage") and a DC (Direct Current) bias (hereinafter called "charging DC voltage) in order to cause the performance of charging the photosensitive member to be sufficiently exhibited. In particular, the AC bias is subjected to a constant current control in order to correspond to the environmental change in the charging load impedance. Also the output voltage (hereinafter called "developing AC voltage") to the developing unit is the superimposed bias of the AC bias (hereinafter called "developing AC voltage") and the DC bias (hereinafter called "developing DC voltage).

In order to form an image on the photosensitive layer by rotating the photosensitive drum, its core is connected to the GND level of the high potential power source circuit at a sliding contact. Therefore, if foreign matter is mixed with the sliding contact portion, the contact resistance is raised to several gigaohms (10⁹Ω). As a result, the reference potential of each of the photosensitive drum, the charger, the developing unit and the transferring device, which constitute the electrostatic image forming portion, becomes different from the GND level which is the reference potential of the high potential power source circuit. In an image forming apparatus which utilizes the corona discharge method, the AC impedance of the charger is several tens of megohms when viewed from the high potential power source circuit. Furthermore, the electric current is about hundreds of microamperes to several milli-amperes. Therefore, even if the contact resistance at the above-described sliding contact portion reaches several megohms, the charging performance of the photosensitive drum does not critically deteriorate. Furthermore, the developing output voltage bias does not deteriorate the charging output voltage bias.

However, in the image recording apparatus which uses the contact charge method, the AC impedance is several megohms when the charger is viewed from the high potential power source. Furthermore, the AC impedance of the developing AC bias when the charging voltage generating circuit is viewed from the drum core is several megohms. Therefore, if the resistance of the sliding contact portion is hundreds of kilo-ohms to several megohms, the developing AC bias is undesirably introduced into the charging voltage generating circuit. As a result, the charging voltage output, and particularly, the constant current control circuit is adversely affected. Therefore, there arises a problem of generation of the unsatisfactorily charged portion on the photosensitive drum to cause an inferior image.

Furthermore, the above-described conventional structure has no means against the change in the equivalent impedance of the photosensitive member when viewed from the charger due to the frequency of the charging AC voltage. Therefore, there arises a problem of the unsatisfactory charge of the photosensitive drum if the frequency is raised due to the change in the environment or the characteristics or the like of the elements. There arises another problem of a dielectric breakdown of the photosensitive member if the frequency is lowered. Accordingly, the allowable width of the frequency of the charging AC voltage must be narrowed, causing problems to arise in that the structure of the power supply circuit becomes too complicated and the cost of the elements cannot be reduced.

As an alternative to this, it might be feasible to employ a structure arranged in such a manner that the frequency of the charging AC voltage is positively changed for the purpose of overcoming the above-described problems.

### SUMMARY OF THE INVENTION

Accordingly, an object of the present invention is to provide an image forming apparatus capable of overcoming the above-described problems experienced with the conventional technology.

An object of the present invention is to provide an image forming apparatus which is capable of preventing an adverse affection such as unsatisfactory charge which can be caused from an introduction of other AC voltage into a charging voltage generating portion due to, for example, contact resistance of a sliding contact portion of a photosensitive drum.

In order to achieve the above-described object, according to one aspect of the present invention, there is provided an image forming apparatus comprising: a recording member on which a latent image is formed, a charger being in contact with said recording member, a charging voltage generating portion applying voltage containing an AC component to said charger, and a constant current control circuit for detecting an AC value in the charging current of said charging voltage generating portion so as to make said AC value in said charging current to be a predetermined value, said image forming apparatus being characterized by application means for applying an AC component having a frequency, which is different from that of said AC component of said charging voltage, to said recording member, and a frequency discriminating circuit for dividing the AC contained in said charging current and the AC transmitted from said application means in order to prevent an erroneous operation of said constant current control circuit from taking place due to an introduction of said AC component applied by said application means into said charging voltage generating portion.

As a result of the structure thus-constituted, the charger positioned in contact with the photosensitive drum is applied with the charging voltage obtained by superimposing the DC voltage generated by the charging voltage generating portion and the AC voltage. At this time, the erroneous operation of the constant current control circuit can be prevented. Furthermore, the value of the AC contained in the charging current transmitted from the charging voltage generating portion can be maintained at a predetermined value by the constant current control circuit.

As a result of the above-described control operation, the performance of charging the photosensitive drum can always properly be exhibited.

Another object of the present invention is to provide an image forming apparatus in which the change in the AC voltage to be applied to a photosensitive member due to the change in the frequency of the charging current can be prevented.

In order to achieve the above-described object, according to another aspect of the present invention, there is provided a high voltage power source circuit for an image recording apparatus comprising a charging voltage generating portion for generating charging voltage to be applied to a charger positioned in contact with a photosensitive drum by superimposing DC voltage and AC voltage, wherein the charging voltage generating portion has a constant current control circuit for maintaining the value of the AC contained in the charging current transmitted therefrom at a predetermined value so that a constant current control is performed by changing the value of the AC contained in the charging current by utilizing the change in the AC voltage frequency contained in the charging voltage.

As a result of the structure thus-constituted, the charger positioned in contact with the photosensitive drum is applied with the charging voltage obtained by superimposing the DC voltage generated by the charging voltage generating portion and the AC voltage.

When the AC voltage frequency contained in the charging voltage is changed, the charging voltage generating portion changes its AC value by utilizing the change in the AC frequency of the charging current transmitted therefrom. Furthermore, the constant current control circuit performs the constant current control in which the AC in the charging current is maintained at a predetermined value.

Even if the AC impedance of the charging voltage generating portion is changed or if the frequency of the AC contained in the charging current is changed due to the change in the environment or the characteristics of the element, the photosensitive drum can be applied with proper AC voltage thanks to the above-described control operation.

Another object of the present invention is to provide an image forming apparatus in which the constant electric current circuit can be stably operated and as well as the charging performance can be maintained at a predetermined level even if an AC except for the charging current is introduced into the charging voltage generating portion or if the charging frequency is changed due to a change in the impedance of the charging voltage generating portion.

Other and further objects, features and advantages of the invention will be appear more fully from the following description and drawings.

### BRIEF DESCRIPTION OF THE DRAWINGS

Fig. 1 is a block diagram which illustrates a first embodiment of the present invention;
Fig. 2 is a circuit diagram which illustrates a charging voltage generating portion according to the first embodiment of the present invention;
Fig. 3 is a graph which illustrates the AC impedance characteristics defined by filter circuit constants and frequencies;
Fig. 4 is circuit diagram which illustrates an essential portion of the first embodiment of the present invention;
Fig. 5 is a block diagram which illustrates a second embodiment of the present invention; and
Fig. 6 is a circuit diagram which illustrates an essential portion of a third embodiment of the present invention.

### DESCRIPTION OF THE PREFERRED EMBODIMENTS

A preferred embodiment of a high potential power source circuit for an image recording apparatus according to the present invention will now be described.

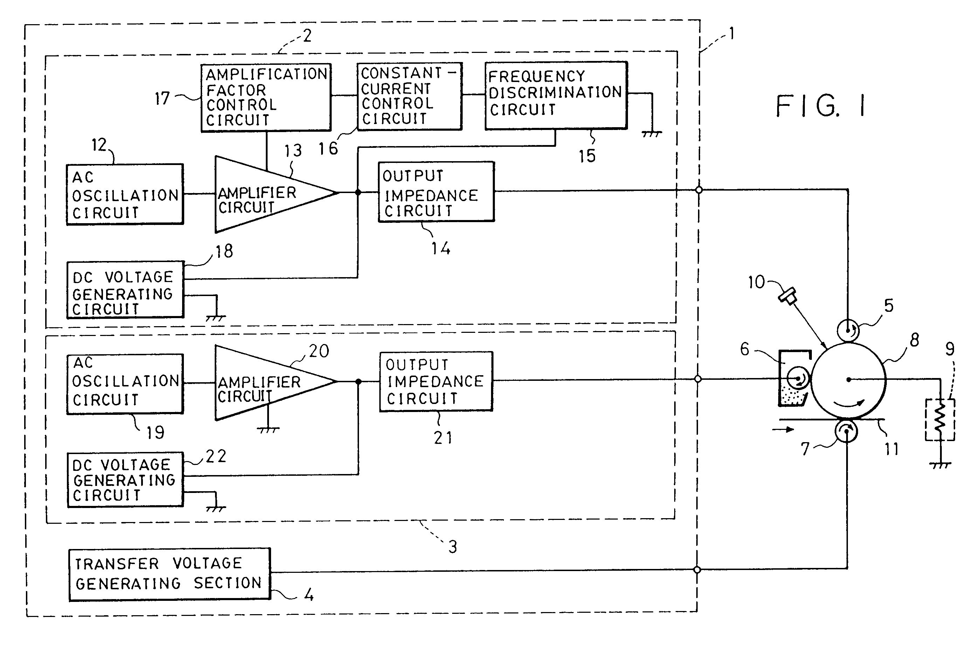

Fig. 1 is a block diagram which illustrates a first embodiment of the present invention. Referring to Fig. 1, a high potential power source circuit 1 of the image recording apparatus includes a charging voltage generating portion 2, a developing voltage generating portion 3 and a transfer voltage generating portion 4. The recording apparatus also has a charging roller 5 which is a charger to which the output voltage (hereinafter called "charging output voltage") from the charging voltage generating portion 2 is applied, and the charging roller 5 is positioned in contact with a photosensitive drum 8. A developing unit 6, is provided, which is positioned in contact with the photosensitive drum 8, and the developing unit 6 is arranged to toner-develop an electrostatic latent image formed by a light emitting element 10 such as a laser diode or the like. According to this embodiment, the developing unit 6 is arranged to act in accordance with a development method which is disclosed in U.S.P. 4,395,476 and in which alternating electric field is utilized by means of AC bias. A transfer roller 7 is also provided for transferring the toner image formed on a photosensitive drum 8 to a transfer medium 11 such as a paper sheet, and the transfer roller 7 is applied with voltage the polarity of which is inverted to that of the toner transmitted from the transfer voltage generating portion 4. A contact resistance 9 of a sliding contact portion is shown in Fig. 1, and which is existed between the core of the photosensitive drum 8 and GND level of the high voltage power supply circuit 1. The charging voltage generating portion 2 has an AC oscillation circuit 12 for applying charging AC voltage to the charging roller 5 via an amplifier circuit 13 and an output impedance circuit 14, a frequency discrimination circuit 15 comprising a filter circuit, for detecting an AC passing from the charging roller 5 to the high potential power source circuit GND via the core of the photosensitive drum 8 so as to generate voltage to be supplied to a constant current control circuit 16. A control level signal transmitted from the constant current control circuit 16 is used to control an amplification factor control circuit 17. An output from the amplification factor control circuit 17 is used to control the amplifier circuit 13 so that the amplitude of the charging AC voltage is controlled. A charging DC voltage generating circuit 18 is also provided for transmitting charging DC voltage which is then superimposed on the charging AC voltage so that charging output voltage is obtained.

The developing voltage generating portion 3 includes an AC oscillation circuit 19 for generating an alternating field between the charging drum 8 and the developing unit 6, and the AC oscillation circuit 19 is superimposed on an output from a DC voltage generating circuit 22 via an amplifier circuit 20, and the DC voltage generating circuit 22 generates a DC developing bias. As a result, developing output voltage superimposed DC and AC bias is applied to the developing unit 6 via an output impedance circuit 21.

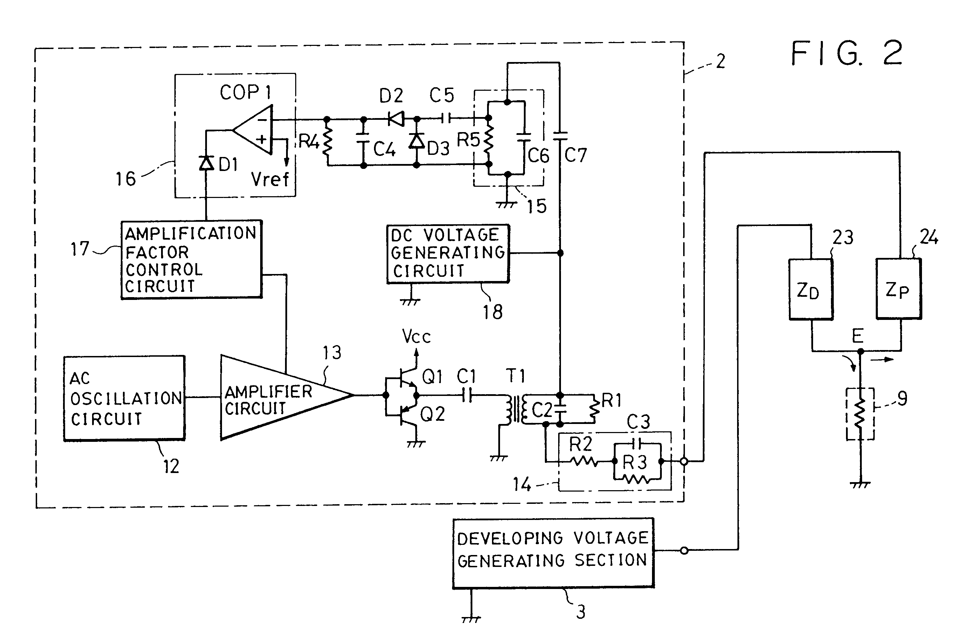

Fig. 2 is a circuit diagram which illustrates the function of the charging voltage generating portion 2. The elements which are the same as those shown in Fig. 1 are given the same reference numerals and their descriptions are omitted here. Equivalent impedance Z_{D} 23 is shown which is viewed from the output terminal of the developing voltage generating portion 3 to the image forming portion. Also equivalent impedance Z_{P} is shown which is viewed from the output terminal of the charging voltage generating portion 2 to the electrostatic image forming portion.

Push-pull transistors are provided for driving a transformer T1 via a capacitor C1 in accordance with the AC voltage supplied from the amplifier circuit 13. A resistor R1 and a capacitor C2 are load impedances of the charging AC voltage is voltage-amplified by the transformer T1, the resistor R1 and the capacitor C2 protecting the circuit when no external load is connected to the high potential power source circuit 1. The resistors R2, R3 and a capacitor C3 constitute the output impedance circuit 14. A resistor R4, capacitors C4, C5, diodes D2 and D3 constitute a voltage doubler rectifier circuit acting to convert the AC voltage at the two ends of the resistor R5 into DC voltage so as to supply it to the negative input terminal of a comparator COP1. The COP1 makes a comparison between reference voltage V_{ref} and the output from the above-described voltage doubler rectifier circuit so as to control the cathode voltage of the diode D1. The comparator COP1 and the diode D1 constitute a constant current control circuit 16.

The amplification factor control circuit 17 controls the amplification factor of the AC voltage in accordance with the anode voltage level of the diode D1. The resistor R5 and the capacitor C6 of the frequency discrimination circuit 15 constitute a filter circuit. A capacitor C7 cuts the DC voltage component of the charging output from the charging voltage generating portion 2. The output voltage from the charging voltage generating portion 2 is applied to the load Zₚ from the transformer T1 via the resistors R2, R3 and the capacitor C3. The charging AC returns to the transformer T1 from the load Z_{P} via the high voltage circuit GND, the filter circuit, which is composed of the resistor R5 and the capacitor C6, and the capacitor C7. At this time, the above-described constant current control is performed in accordance with the AC voltage generated at the two ends of the resistor R5.

The AC component transmitted from the developing voltage generating portion 3 is applied to the developing load Z_{D}. When value of the contact resistance 9 of the sliding contact portion is zero, the developing AC current returns to the developing voltage generating circuit via the high voltage power source circuit GND. However, if the contact resistance 9 is generated at the sliding contact portion, the developing AC current is introduced into the circuit of the charging voltage generating portion 2 by virtue of the contact resistance 9 and the ratio of the impedance viewed from contact E to the charging portion. The developing AC current introduced into the circuit of the charging voltage generating portion 2 generates the AC voltage at the two ends of the resistor R5, causing the constant current control circuit 16 to be operated erroneously. Therefore, by setting a filter circuit constant of the resistor R5 and the capacitor C6 in such a manner that the AC voltage, which is able to cause the above-described erroneous operation to take place, cannot be generated at the two ends of the resistor R5 even if the developing AC current is introduced into the circuit of the charging voltage generating portion 2, the constant current control circuit 16, in which the charging AC passes through, can be operated normally.

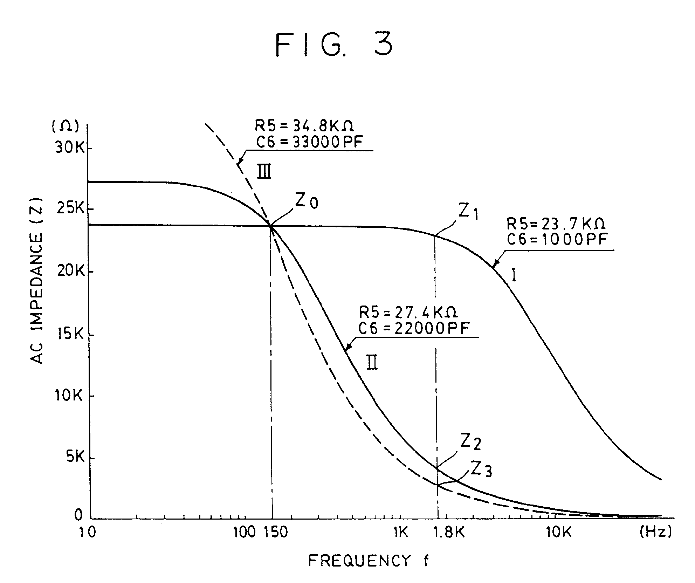

Fig. 3 is a graph which illustrates the characteristics of the AC impedance, where there is illustrated the absolute value |Z| of the AC impedance of the resistor R5 and the capacitor C6 in a case where the charging AC voltage frequency is 150 Hz and the developing AC voltage frequency is 1800 Hz. Curve I stands for the AC impedance |Z| with respect to frequency f in a case where R5 = 23.7 KΩ and C6 = 1000 pF, Curve II stands for the same in a case where R5 = 27.4 KΩ and C6 = 2200 pF and Curve III stands for the same in a case where R5 = 34.8 KΩ and C6 = 3300 pF.

In the case of curve I, the AC impedance |Z₀| at the frequency of 150 Hz and that |Z₁| at the frequency of 1800 Hz are substantially the same. Therefore, if the developing AC is introduced into the charging voltage generating portion 2, AC voltage is generated at the two ends of the resistor R5, causing an erroneous operation to be taken place in the constant current control circuit 16.

In the cases of curves II and III, the AC impedances |Z₂| and |Z₃| at the frequency of 1800 Hz are extremely smaller in comparison to the AC impedance |Z₀| at the frequency of 150 Hz. Therefore, even if the developing AC is introduced into the circuit of the charging voltage generating portion 2, the constant current control circuit 16 operates normally. The more the difference between the AC frequency of the charging current and that of the developing current, the more satisfactory effect can, of course, be obtained in the frequency discrimination circuit 15 composed of the resistor R5 and the capacitor C6.

That is, even if the developing AC is introduced into the charging voltage generating portion 2 from the developing unit 6 via the GND, the frequency discrimination circuit formed into the filter circuit composed of the resistor R5 and the capacitor C6 distinguishes the charging AC and the developing AC so as to operate the constant current control circuit by using the charging AC. As a result, an adverse affection of the introduced developing AC can be eliminated.

Furthermore, another problem of the deterioration in the charging performance due to the change in the frequency of the charging output caused from the change in the impedance of the charging output portion can be overcome according to this embodiment. Then, this effect will now be described.

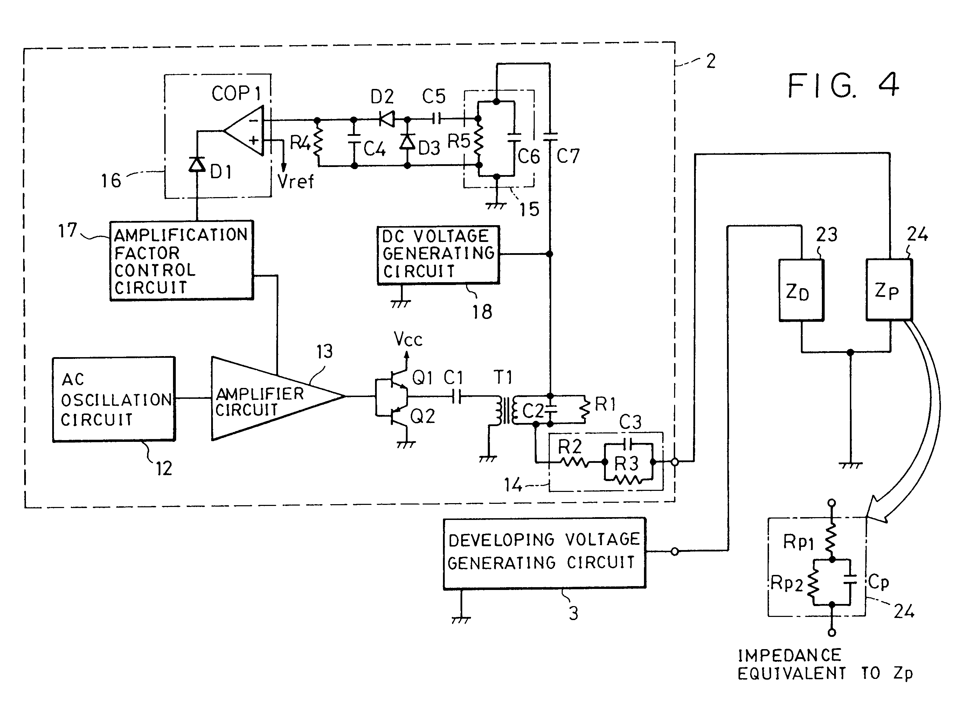

As shown in Fig. 4, the charge load impedance Zₚ can equivalently be expressed by resistance Rₚ₁ of the charging roller 5 and impedance Rₚ₂ and Cₚ of the photosensitive drum 8. In order to maintain the charging performance at constant, the surface of the photosensitive drum 8 must be supplied with AC voltage the amplitude of which cannot be changed. However, since resistance R_{P1} of the charging roller 5 due to the change in the environment or the like, the value of the charging current must be controlled to a constant value for the purpose of applying the AC voltage, the amplitude of which cannot be changed, to the photosensitive drum 8.

The impedance Zₚ of the photosensitive drum 8 can be expressed by a parallel connection constituted by resistor Rₚ₂ and capacitor Cₚ. Therefore, when the frequency of the charging AC is changed, impedance Zₚ is also changed. As a result, even if the charging AC is constant-current-controlled, the amplitude of the charging AC voltage to be applied to the surface of the photosensitive drum will undesirably be changed.

According to the present invention, if the above-described frequency change takes place, the amplitude of the charging AC voltage to be supplied to the surface of the photosensitive drum can be maintained at a predetermined value.

The constant current control of the charging AC is, as described above, performed by comparing voltage doubler rectifying output of the AC voltage at the two ends of the resistor R5 with voltage V_{ref} at the positive input terminal of the COP1. In order to improve the constant current characteristics, generation of the high frequency noise component at the two ends of the resistor R5 is prevented by arranging the filter circuit in such a manner that the capacitor C6 is connected in parallel.

Fig. 3 is a graph which illustrates the AC impedance characteristics of the resistor R5 and the capacitor C6.

Curve I stands for the AC impedance |Z| with respect to frequency f in a case where R5 = 23.7 KΩ and C6 = 1000 pF, Curve II stands for the same in a case where R5 = 27.4 KΩ and C6 = 2200 pF and Curve III stands for the same in a case where R5 = 34.8 KΩ and C6 = 3300 pF.

There has has been a prior art arranged in such a manner that a filter circuit having the characteristics of curve I is employed for the purpose of cutting the high frequency noise component and improving the constant current characteristics in a case where the nominal frequency of the charging AC voltage is 150 Hz. An assumption is made that the charge load impedance Zp, Rₚ₁ = 0.5 MΩ, Rₚ₂ = 100 MΩ and Cp = 300 pF. In a case where 150 Hz sine wave the amplitude of which is 500 »A is applied to the charge load, the amplitude of the charging AC voltage to be applied to the surface of the photosensitive drum is 1765 V because the absolute value of the parallel impedance of Rₚ₂ and Cₚ is 3.53 MΩ. In a case where the frequency change is ± 20 %, the absolute value of the parallel impedance of Rₚ₂ and Cₚ is 4.42 MΩ and the amplitude of the charging AC voltage at the surface of the photosensitive drum is 2210 V when the frequency is 120 Hz in the above-described state. In a case where the same is 180 Hz, the parallel impedance of Rₚ₂ and Cₚ is 2.95 MΩ and the amplitude of the charging AC voltage at the surface of the photosensitive drum is 1475 V. Assuming that the charging AC voltage amplitude at which the most suitable charging performance can be realized is 1765 V, a problem of unsatisfactory charge takes place when the frequency is increased by 20 % to 180 Hz. In a case where the frequency is reduced by 20 % to 120 Hz, an abnormal discharge takes place, causing a risk to be generated in that the photosensitive insulating layer of the photosensitive drum will be broken.

Accordingly, according to this embodiment, the frequency discrimination circuit is employed which comprises the filter circuit 15 having the characteristics with which the constant current value is enlarged when the charging AC frequency is raised and the same is reduced when the charging AC frequency is lowered. As a result, satisfactory charging performance can always be exhibited even if the frequency is changed. Then, an example of the characteristics of the filter circuit 15 according to this embodiment will now be described.

Curves II and III of Fig. 3 are curves which designate the AC impedance-frequency characteristics of the filter circuit exhibiting the above-described characteristics. Assuming that the controlled-value of the charging AC amplitude of curve I at 150 Hz is 500 »A, the AC impedance increases in a case of curve II at frequency of 120 Hz such that the controlled value of the charging AC amplitude is 476 »A and the amplitude of the charging AC voltage at the surface of the photosensitive drum is 2103 V. Similarly, in a case where the frequency is 180 Hz, the AC impedance decreases such that the controlled value of the charging AC amplitude is 524 »A and the amplitude of the charging AC voltage at the surface of the photosensitive drum is 1546 V. In a case of curve III at the frequency of 120 Hz, the controlled value of the charging AC amplitude is 451 »A and the amplitude of the charging AC voltage at the surface of the photosensitive drum is 1993 V. Similarly, in a case where the frequency is 180 Hz, the controlled value of the charging AC amplitude is 559 »A and the amplitude of the charging AC voltage at the surface of the photosensitive drum is 1649 V.

As described above, the charging AC current value is changed in accordance with the change in the charging frequency, the amplitude of the charging AC voltage at the surface of the photosensitive drum can be maintained at a predetermined value.

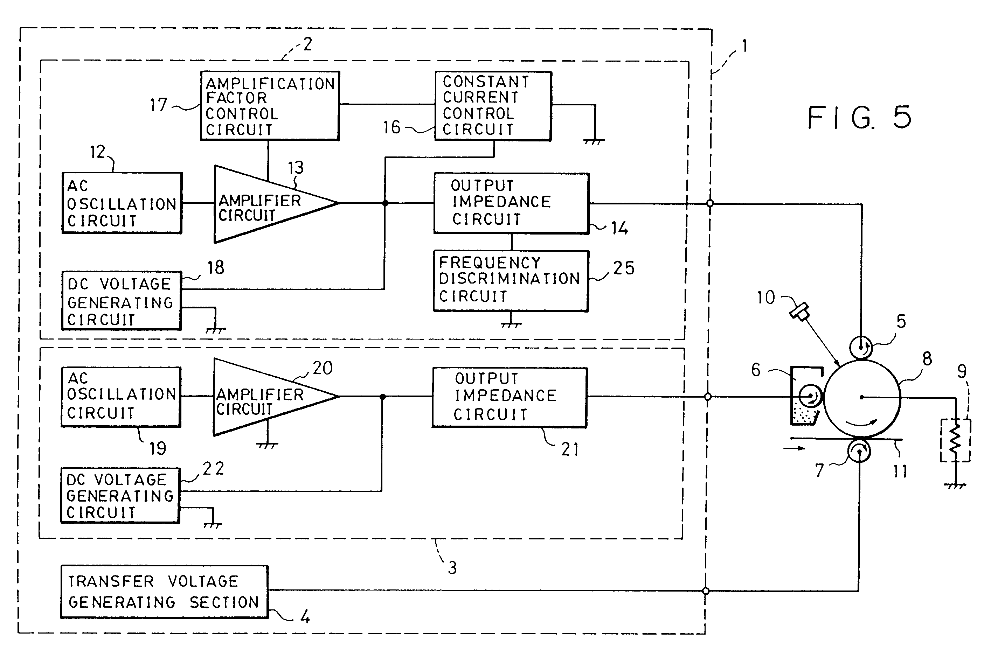

Fig. 5 is a block diagram which illustrates a second embodiment of the present invention. The elements which are the same or equivalent to those shown in Fig. 1 are given the same reference numerals and their descriptions are omitted here.

A frequency discrimination circuit 25 comprises a filter circuit which allows only the developing frequency components to pass through. If the developing AC current is introduced into the circuit of the charging voltage generating portion 2, only the developing AC currents are caused to flow into the high voltage power source circuit GND via the frequency discrimination circuit 25 so that the constant current control circuit 16 cannot be affected.

As a result of the structure thus constituted, the constant current control using only the charging frequency components can be performed.

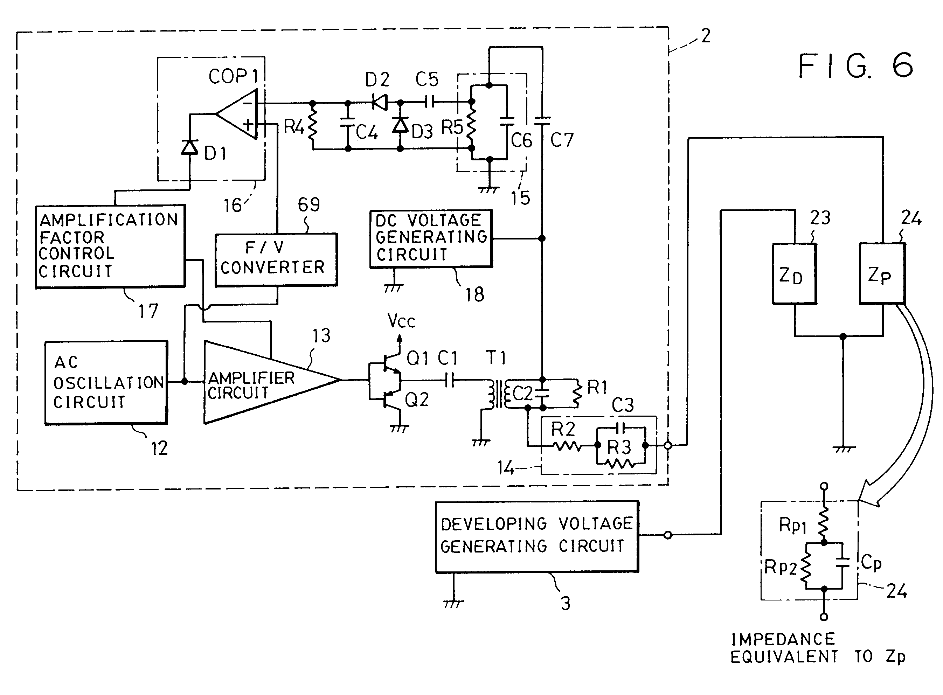

Fig. 6 is a circuit diagram which illustrates an essential portion of a third embodiment of the present invention. The elements which are the same or equivalent to those shown in Fig. 4 are given the same reference numerals and their descriptions are omitted here.

This embodiment is characterized in that a frequency-voltage conversion circuit 69 is provided which is able to control the constant current control circuit 16 by the output from the AC oscillation circuit 12. The frequency-voltage conversion circuit 69 transmits voltage, which is in proportion to the frequency of the AC oscillation circuit 12, to the positive input terminal of the comparator COP1 of the constant current control circuit 16. Therefore, if the frequency is raised, the voltage level at the COP1 is also raised, causing the charging AC current to also be enlarged. As described above, according to this embodiment, the AC current value is, similarly to the first embodiment, changed in accordance with the change in the AC frequency. Therefore, constant charging performance can be maintained.

In particular, an effect can be obtained in a recording apparatus which is capable of switching over the image resolution in that an undesirable generation of a moire image can be prevented by performing the constant current control in such a manner that the frequency of the charging AC voltage is changed in accordance with the image resolution. In this case, the above-described effect can easily be obtained according to the third embodiment.

As described above, according to the first and second embodiments of the present invention, the charger positioned in contact with the photosensitive drum is applied with charging voltage obtained by superimposing the DC voltage and the AC voltage. On the other hand, the developing unit positioned in contact with the photosensitive drum is applied with developing voltage obtained by superimposing the AC voltage and the DC voltage, the frequency of the above-described AC voltage being different from that of the AC voltage used as the charging voltage.

Furthermore, if the AC contained in the developing current is introduced from the developing unit into the charging voltage generating portion due to the contact resistance of the sliding contact portion of the photosensitive drum, the frequency discrimination circuit disposed in the charging voltage generating portion divides the AC contained in the charging current and the AC contained in the developing current transmitted from the developing voltage generating portion. As a result, the constant current control circuit is operated by the AC contained in the charging current. Therefore, the erroneous operation of the constant current control circuit can be prevented so that the AC value contained in the charging current can be maintained at a constant value by the constant current control circuit. As a result, a high voltage power source circuit for an image recording apparatus capable of always exhibiting excellent charging performance can be provided.

As described above, according to the first and third embodiments of the present invention, the charger positioned in contact with the photosensitive drum is applied with charging voltage obtained by superimposing the DC voltage generated in the charging voltage generating portion and the AC voltage. The charging voltage generating portion changes the AC value in accordance with the change in the AC frequency in the charging voltage. Furthermore, the constant current control capable of maintaining the AC contained in the charging current is performed by the constant current control circuit. Therefore, even if the frequency of the AC voltage in the charging voltage is changed due to the change in the AC impedance of the electrostatic image forming portion, the change in the environment or the change in the characteristics of the element, proper charging AC voltage can be applied to the photosensitive drum. Therefore, the generation of an abnormal image due to the unsatisfactory charge can be prevented.

Furthermore, the accuracy level of the charging AC frequency can be lowered in comparison to the conventional technology. Therefore, the necessity of using expensive elements exhibiting excellent temperature characteristics can be eliminated. causing the overall cost to be reduced.

In addition, according to the present invention, there is provided a high voltage power source device for an image recording apparatus which is preferably adapted to an image recording apparatus of a type capable of effectively recording a proper image by changing the frequency of the charging AC voltage by the image resolution.

According to the first embodiment of the present invention, even if the AC for use in the development operation is introduced into the charging voltage generating portion, and as well as if the impedance of the charging voltage generating portion is changed and thereby the charging frequency is changed, the constant current circuit can stably be operated. Furthermore, the charging performance can be maintained at a predetermined level.

For example, although each of the above-described embodiments of the present invention is described about a case in which the developing unit applies the other AC component to the surface of the photosensitive drum, it is preferable that the following voltage be cut in order to further accurately perform the constant current control operation because the following voltage is able to contain the AC component: voltage to be applied to a transfer charger for performing the transfer operation; voltage to be applied to a pre-transfer charger disposed in front of the transfer unit and capable of causing the transfer operation to be easily performed; voltage to be applied to a separation charger for separating the transfer paper from the photosensitive member; voltage to be applied to a blade for cleaning residual toner on the photosensitive member; voltage applied to a cleaning pre-charger acting before the cleaning operation and capable of causing the cleaning operation to be performed easily; and voltage to be applied to an electricity removing charger for making the photosensitive member to have a uniform potential.

## Claims

1. An image forming apparatus comprising:
a) a recording member **(8)** on which a latent image is formed;
b) a charger **(5)** being in contact with said recording member **(8)**;
c) a charging voltage generating portion **(2)** applying voltage containing an AC component to said charger **(5)**; and
d) a constant current control circuit **(16, 17)** for detecting the amplitude of an AC component in the charging current of said charging voltage generating portion **(2)** so as to make said amplitude of said AC component in said charging current to be a predetermined value,
**characterized by**
e) application means **(3, 6)** for applying an AC voltage component having a frequency, which is different from that of said AC component of said charging voltage, to said recording member **(8)**; and
f) a frequency discriminating circuit **(15)** for dividing the AC component contained in said charging current and the AC component transmitted from said application means **(3, 6)** in order to prevent an erroneous operation of said constant current control circuit **(16, 17)** from taking place due to an introduction of said AC component applied by said application means **(3, 6)** into said charging voltage generating portion **(2)**.

2. An image forming apparatus according to claim 1, **characterized in that** said frequency discriminating circuit **(15)** cuts the frequency of said AC voltage component applied by said application means **(3, 6)**.

3. An image forming apparatus according to claim 1, **characterized in that** said application means **(3, 6)** comprises a developing unit **(6)** for developing a latent image formed on said recording member **(8)**, said developing unit **(6)** being supplied with a voltage formed by superimposing a DC bias on an AC voltage.

4. An image forming apparatus according to claim 1, **characterized in that** said charger comprises a charger roller **(5)**.

5. An image forming apparatus according to claim 2, **characterized in that** said frequency discrimination circuit **(15)** has frequency characteristics capable of changing said amplitude of said AC component contained in said charging current by using the change in the AC frequency of said charging voltage.

6. An image forming apparatus comprising:
a) a recording member **(8)** on which a latent image is formed;
b) a charger **(5)** being in contact with said recording member **(8)**;
c) a charging voltage generating portion **(2)** applying voltage containing an AC component to said charger **(5)**; and
d) a constant current control circuit **(16, 17)** for detecting the amplitude of an AC component in the charging current of said charging voltage generating portion **(2)** so as to make said amplitude of said AC component in said charging current to be a predetermined value,
**characterized by**
e) control means **(69, 15)** comprising a frequency discriminating circuit **(15)** controlling said constant current control circuit **(16, 17)** in such a manner that said amplitude of said AC component contained in said charging current is changed in accordance with a frequency change of the AC component contained in said charging voltage.

7. An image forming apparatus according to claim 6, **characterized** **by** said frequency discriminating circuit **(15)** having frequency characteristics capable of changing said amplitude of said AC component in said charging current by using said frequency change of said AC component of said charging voltage.

8. An image forming apparatus according to claim 6, **characterized in that** said control means has a frequency-voltage converter **(69)** for controlling said constant current control circuit **(16, 17)** by converting said change in said AC voltage frequency into voltage.

9. An image forming apparatus according to claim 7, **characterized by** application means **(3, 6)** for applying a voltage containing a further AC component having a frequency, which is different from that of said AC component of said charging voltage, to said recording member **(8)**, wherein said frequency discriminating circuit **(15)** has frequency characteristics capable of preventing the introduction of said further AC component applied by said application means **(3, 6)** into said constant current control circuit **(16, 17)**.

10. An image forming apparatus according to claim 1, **characterized by** means for adapting said amplitude of said AC component in said charging current by changing the frequency of said AC component of said charging voltage.

## Patentansprüche

1. Bilderzeugungsgerät mit
a) einem Aufzeichnungsteil (8), auf dem ein Latentbild erzeugt wird,
b) einer Ladevorrichtung (5), die in Kontakt mit dem Aufzeichnungsteil (8) ist,
c) einem Ladespannungs-Generatorteil (2), das eine eine Wechselspannungskomponente enthaltende Spannung an die Ladevorrichtung (5) anlegt, und
d) einer Konstantstrom-Steuerschaltung (16, 17) zum Erfassen der Amplitude einer Wechselstromkomponente in dem Ladestrom des Ladespannungs-Generatorteils (2), damit die Amplitude der Wechselstromkomponente in dem Ladestrom auf einen vorbestimmten Wert eingestellt wird,
**gekennzeichnet durch**
e) eine Anlegevorrichtung (3, 6) zum Anlegen einer Wechselspannungskomponente mit einer von der der Wechselspannungskomponente der Ladespannung verschiedenen Frequenz an das Aufzeichnungsteil (8) und
f) eine Frequenzunterscheidungsschaltung (15) zum Aufteilen der in dem Ladestrom enthaltenen Wechselstromkomponente und der von der Anlegevorrichtung (3, 6) übertragenen Wechselstromkomponente, damit eine fehlerhafte Arbeitsweise der Konstantstrom-Steuerschaltung (16, 17) verhindert wird, die infolge einer Zuführung der durch die Anlegevorrichtung (3, 6) zugeführten Wechselstromkomponente zu dem Ladespannungs-Generatorteil (2) auftritt.

2. Bilderzeugungsgerät nach Anspruch 1, **dadurch gekennzeichnet, daß** die Frequenzunterscheidungsschaltung (15) die Frequenz der durch die Anlegevorrichtung (3, 6) angelegten Wechselspannungskomponente beseitigt.

3. Bilderzeugungsgerät nach Anspruch 1, **dadurch gekennzeichnet, daß** die Anlegevorrichtung (3, 6) eine Entwicklungseinheit (6) zum Entwickeln eines auf dem Aufzeichnungsteil (8) gebildeten Latentbildes aufweist, wobei die Entwicklungseinheit (6) mit einer Spannung gespeist wird, die durch Überlagern einer Wechselspannung mit einer Gleich-Vorspannung erzeugt wird.

4. Bilderzeugungsgerät nach Anspruch 1, **dadurch gekennzeichnet, daß** die Ladevorrichtung eine Ladewalze (5) aufweist.

5. Bilderzeugungsgerät nach Anspruch 2, **dadurch gekennzeichnet, daß** die Frequenzunterscheidungsschaltung (15) einen Frequenzgang aufweist, der die Amplitude der in dem Ladestrom enthaltenen Wechselstromkomponente durch Verwendung der Veränderung der Wechselspannungsfrequenz der Ladespannung verändert.

6. Bilderzeugungsgerät mit
a) einem Aufzeichnungsteil (8), auf dem ein Latentbild erzeugt wird,
b) einer Ladevorrichtung (5), die in Kontakt mit dem Aufzeichnungsteil (8) ist,
c) einem Ladespannungs-Generatorteil (2), das eine eine Wechselspannungskomponente enthaltende Spannung an die Ladevorrichtung (5) anlegt, und
d) einer Konstantstrom-Steuerschaltung (16, 17) zum Erfassen der Amplitude einer Wechselstromkomponente in dem Ladestrom des Ladespannungs-Generatorteils (2), damit die Amplitude der Wechselstromkomponente in dem Ladestrom auf einen vorbestimmten Wert eingestellt wird,
**gekennzeichnet durch**
e) eine Steuereinrichtung (69, 15), die eine Frequenzunterscheidungsschaltung (15) aufweist, die die Konstantstrom-Steuerschaltung (16, 17) auf eine solche Weise steuert, daß die Amplitude der in dem Ladestrom enthaltenen Wechselstromkomponente entsprechend einer Frequenzveränderung der in der Ladespannung enthaltenen Wechselspannungskomponente verändert wird.

7. Bilderzeugungsgerät nach Anspruch 6, **gekennzeichnet durch** die Frequenzunterscheidungsschaltung (15) mit einem Frequenzgang, der die Amplitude der Wechselstromkomponente in dem Ladestrom durch Verwendung der Frequenzveränderung der Wechselspannungskomponente der Ladespannung verändert.

8. Bilderzeugungsgerät nach Anspruch 6, **dadurch gekennzeichnet, daß** die Steuereinrichtung einen Frequenz-Spannungs-Wandler (69) zum Steuern der Konstantstrom-Steuerschaltung (16, 17) durch Umwandeln der Veränderung der Wechselspannungsfrequenz in eine Spannung aufweist.

9. Bilderzeugungsgerät nach Anspruch 7, **gekennzeichnet durch** eine Anlegevorrichtung (3, 6) zum Anlegen einer eine weitere Wechselspannungskomponente enthaltenden Spannung mit einer Frequenz, die von der der Wechselspannungskomponente der Ladespannung verschieden ist, an das Aufzeichnungsteil (8), wobei die Frequenzunterscheidungsschaltung (15) einen Frequenzgang aufweist, der die Zuführung der durch die Anlegevorrichtung (3, 6) angelegten weiteren Wechselspannungskomponente zu der Konstantstrom-Steuerschaltung (16, 17) verhindert.

10. Bilderzeugungsgerät nach Anspruch 1, **gekennzeichnet durch** eine Einrichtung zum Anpassen der Amplitude der Wechselstromkomponente in dem Ladestrom durch Verändern der Frequenz der Wechselspannungskomponente der Ladespannung.

## Revendications

1. Appareil de formation d'images comprenant:
a) un élément d'enregistrement (8) sur lequel une image latente est formée;
b) un chargeur (5) en contact avec ledit élément d'enregistrement (8);
c) une partie (2) génératrice de tension de charge appliquant une tension contenant une composante alternative audit chargeur (5); et
d) un circuit de commande (16, 17) de courant constant pour détecter l'amplitude d'une composante alternative dans le courant de charge de ladite partie (2) génératrice de tension de charge de manière à porter ladite amplitude de ladite composante alternative dans ledit courant de charge à une valeur prédéterminée,
**caractérisé par**
e) un moyen d'application (3, 6) pour appliquer une composante de tension alternative ayant une certaine fréquence, qui est différente de celle de ladite composante alternative de ladite tension de charge, audit élément d'enregistrement (8); et
f) un circuit (15) de discrimination de fréquence pour diviser la composante alternative contenue dans ledit courant de charge et la composante alternative transmise par ledit moyen d'application (3, 6) afin d'empêcher un fonctionnement erroné dudit circuit (16, 17) de commande de courant constant de s'installer sous l'effet de l'introduction de ladite composante alternative appliquée par ledit moyen d'application (3, 6) dans ladite partie (2) génératrice de tension de charge.

2. Appareil de formation d'images selon la revendication 1, **caractérisé en ce que** ledit circuit (15) de discrimination de fréquence découpe la fréquence de ladite composante de tension alternative appliquée par ledit moyen d'application (3, 6).

3. Appareil de formation d'images selon la revendication 1, **caractérisé en ce que** ledit moyen d'application (3, 6) comprend une unité (6) de développement pour développer une image latente formée sur ledit élément d'enregistrement (8), ladite unité de développement (6) étant alimentée par une tension formée en superposant une polarisation en courant continu et une tension alternative.

4. Appareil de formation d'images selon la revendication 1, **caractérisé en ce que** ledit chargeur comprend un rouleau chargeur (5).

5. Appareil de formation d'images selon la revendication 2, **caractérisé en ce que** ledit circuit (15) de discrimination de fréquence a des caractéristiques de fréquence capables de modifier ladite amplitude de ladite composante alternative contenue dans ledit courant de charge en utilisant la modification de la fréquence en courant continu de ladite tension de charge.

6. Appareil de formation d'images comprenant:
a) un élément d'enregistrement (8) sur lequel une image latente est formée;
b) un chargeur (5) en contact avec ledit élément d'enregistrement (8);
c) une partie (2) génératrice de tension de charge appliquant une tension contenant une composante alternative, audit chargeur (5); et
d) un circuit (16, 17) de commande de courant constant pour détecter l'amplitude d'une composante alternative dans le courant de charge de ladite partie (2) génératrice de tension de charge de manière à porter ladite amplitude de ladite composante alternative dans ledit courant de charge à une valeur prédéterminée,
**caractérisé par**
e) un moyen de commande (69, 15) comprenant un circuit (15) de discrimination de fréquence commandant ledit circuit (16, 17) de commande de courant constant de manière que ladite amplitude de ladite composante alternative contenue dans ledit courant de charge soit modifiée en fonction d'un changement de fréquence de la composante alternative contenue dans ladite tension de charge.

7. Appareil de formation d'images selon la revendication 6, **caractérisé en ce que** ledit circuit (15) de discrimination de fréquence ayant des caractéristiques de fréquence capables de modifier ladite amplitude de ladite composante alternative dans ledit courant de charge en utilisant ladite modification de fréquence de ladite composante alternative de ladite tension de charge.

8. Appareil de formation d'images selon la revendication 6, **caractérisé en ce que** ledit moyen de commande comporte un convertisseur (69) fréquence-tension pour commander ledit circuit (16, 17) de commande de courant constant en convertissant ladite modification dans ladite fréquence de tension alternative, en tension.

9. Appareil de formation d'images selon la revendication 7, **caractérisé par** un moyen d'application (3, 6) pour appliquer une tension contenant une autre composante alternative ayant une certaine fréquence, qui est différente de celle de ladite composante alternative de ladite tension de charge, audit élément d'enregistrement (8), dans lequel ledit circuit (15) de discrimination de fréquence a des caractéristiques de fréquence capables d'empêcher l'introduction de ladite autre composante alternative appliquée par ledit moyen d'application (3, 6) dans ledit circuit (16, 17) de commande de courant constant.

10. Appareil de formation d'images selon la revendication 1, **caractérisé par** un moyen pour adapter ladite amplitude de ladite composante alternative dans ledit courant de charge en modifiant la fréquence de ladite composante alternative de ladite tension de charge.
